(19) Europäisches Patentamt
European Patent Office
Office européen des brevets

(11) Veröffentlichungsnummer: **0 270 832**
**A1**

(12) **EUROPÄISCHE PATENTANMELDUNG**

(21) Anmeldenummer: **87116145.1**

(51) Int. Cl.[4]: **C07F 9/165 , A01N 57/12**

(22) Anmeldetag: **03.11.87**

(30) Priorität: **17.11.86 JP 271741/86**

(43) Veröffentlichungstag der Anmeldung: **15.06.88 Patentblatt 88/24**

(84) Benannte Vertragsstaaten: **BE CH DE FR GB IT LI NL**

(71) Anmelder: **NIHON TOKUSHU NOYAKU SEIZO K.K.**
**Itohpia Nihonbashi Honcho Building 7-1,**
**Nihonbashi Honcho 2-chome**
**Chuo-ku Tokyo 103(JP)**

(72) Erfinder: **Kudamatsu, Akio**
**179, Kariyado Nakahara-ku**
**Kawasaki-shi Kanagawa-ken(JP)**
Erfinder: **Kume, Toyohiko**
**6-7-8, Asahigaoka**
**Hino-shi Tokyo(JP)**
Erfinder: **Tsuboi, Shinichi**
**3-26-1, Hirayama**
**Hino-shi Tokyo(JP)**
Erfinder: **Isono, Kunihiro**
**2-32-4, Asahigaoka**
**Hino-shi Tokyo(JP)**

(74) Vertreter: **Schumacher, Günter, Dr. et al**
**c/o Bayer AG Konzernverwaltung RP**
**Patentabteilung**
**D-5090 Leverkusen 1 Bayerwerk(DE)**

(54) **Neues Phosphorothiolat.**

(57) Offenbart wird das neue O-Ethyl-S-sec-butyl-O-2,2,3,3-tetrafluoro-1-propylphosphorothiolat der Formel (I)

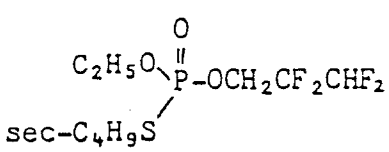

(I)

und die Verwendung der neuen Verbindung als Boden-Insektizid und Nematizid.

EP 0 270 832 A1

## Neues Phosphorothiolat

Die vorliegende Erfindung betrifft ein neues Phosphorothiolat, Verfahren zu seiner Herstellung und seine Verwendung als Insektizid und Nematizid.

Es wurde bereits offenbart, daß bestimmte organische Phosphorsäureester insektizide, akarizide und/oder nematizide Aktivitäten besitzen (siehe die JP-OS 9010/1980).

Nunmehr wurde ein neues Phosphorothiolat gefunden, nämlich O-Ethyl-S-sec-butyl-O-2,2,3,3-tetrafluoro-1-propylphosphorothiolat der Formel (I)

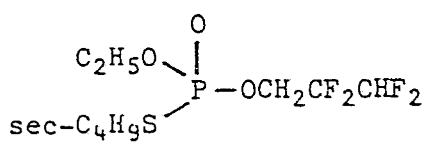

(I)

Das neue Phosphorothiolat der Formel (I) wird erhalten, wenn

a) Thiophosphorylhalogenide der Formel (II)

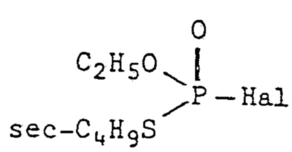

(II) ,

Nit 220

in der Hal Halogen bezeichnet, mit Verbindungen der Formel (III)

$$M-OCH_2CF_2CHF_2 \qquad (III),$$

in der M Wasserstoff oder ein Alkalimetall-Atom ist, in Gegenwart eines inerten Lösungsmittels und gegebenenfalls in Gegenwart eines säurebindenden Mittels umgesetzt werden oder

b) Verbindungen der Formel (IV)

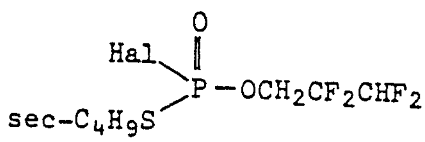

(IV) ,

in der Hal die oben angegebene Bedeutung hat, mit Verbindungen der Formel (V)

$$M-O-C_2H_5 \qquad (V),$$

in der M die oben angegebenen Bedeutungen hat, in Gegenwart eines inerten Lösungsmittels und gegebenenfalls in Gegenwart eines säurebindenden Mittels umgesetzt werden oder

c) O-Ethyl-O-2,2,3,3-tetrafluoro-1-propylphosphit der Formel (VI)

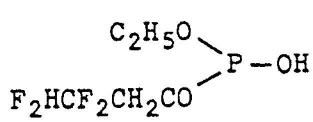

(VI)

mit Verbindungen der Formel (VII)

sec-$C_4H_9$S-Hal (VII),

in der Hal die oben angegebene Bedeutung hat, in Gegenwart eines inerten Lösungsmittels und gegebenenfalls in Gegenwart eines säurebindenden Mittels umgesetzt werden.

In den vorstehenden Formeln bezeichnet das Alkalimetall-Atom (Ion) M vorzugsweise Natrium oder Kalium, und Hal bezeichnet vorzugsweise Chloro oder Bromo oder Iodo, besonders bevorzugt Chloro oder Bromo.

Das neue Phosphorothiolat zeigt potente boden-insektizide und nematizide Eigenschaften.

Überraschenderweise zeigt die Verbindung der Formel (I) gemäß der vorliegenden Erfindung bei niedriger Konzentration eine wesentlich größere pestizide Wirkung gegen Boden-Insekten und Nematoden (vorzugsweise Boden-Insekten) als die Verbindungen mit analoger Struktur, die aus der genannten JP-OS 9010/1980 bekannt sind.

Wenn beispielsweise in der Verfahrensvariante a) O-Ethyl-S-sec-butylphosphorochloridthioat und 2,2,3,3-Tetrafluoro-1-propanol als Ausgangsstoffe für die Herstellung der erfindungsgemäßen Verbindung eingesetzt werden, kann der Reaktionsverlauf durch die folgende Gleichung dargestellt werden:

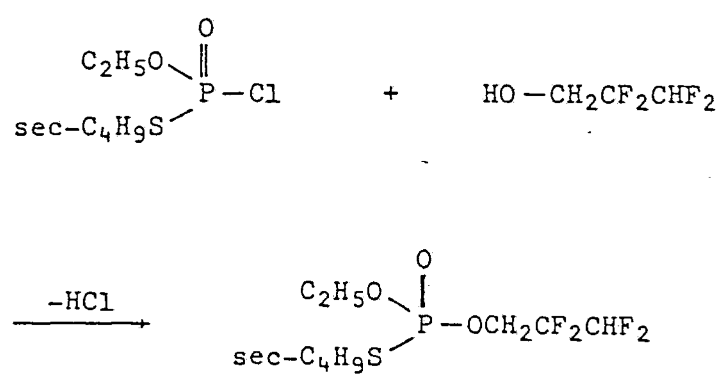

In der Verfahrensvariante a) ist das Ausgangsmaterial der Formel (II) eine auf dem Gebiet der organischen Phosphor-Chemie wohlbekannte Verbindung, und das Ausgangsmaterial der Formel (III) ist in der JP-OS 9010/1980 offenbart.

Wenn beispielsweise in der Verfahrensvariante b) O-2,2,3,3-Tetrafluoro-1-propyl-S-sec-butylphosphorochloridthioat und Ethanol als Ausgangsstoffe für die Herstellung der Verbindung der Formel (I) eingesetzt werden, kann der Reaktionsverlauf durch die folgende Gleichung dargestellt werden:

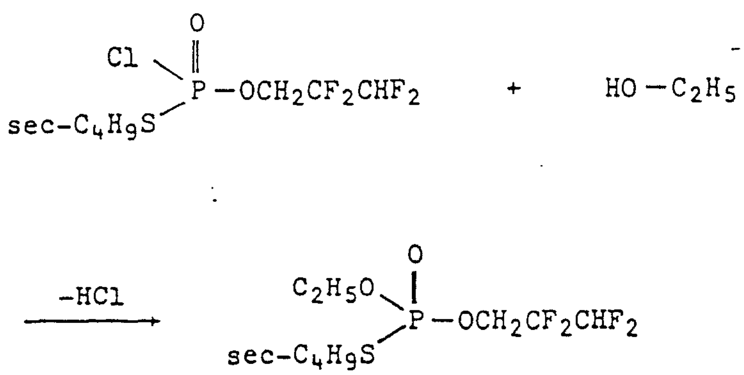


In der Verfahrensvariante b) wird das Ausgangsmaterial der Formel (IV) in einfacher Weise dadurch erhalten, daß die Verbindung der Formel (VIII)

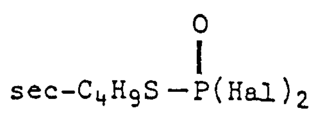
(VIII) ,

in der Hal die oben angegebene Bedeutung hat, mit der im Vorstehenden dargestellten Verbindung der Formel (III) umgesetzt wird.

Die Verbindung der Formel (VIII) ist eine auf dem Gebiet der organischen Phosphor-Chemie wohlbekannte Verbindung.

Wenn beispielsweise in der Verfahrensvariante c) O-Ethyl-O-2,2,3,3-tetrafluoro-1-propylphosphit und 2-Butansulfenylchlorid als Ausgangsstoffe für die Herstellung der erfindungsgemäßen Verbindung eingesetzt werden, kann der Reaktionsverlauf durch die folgende Gleichung dargestellt werden:

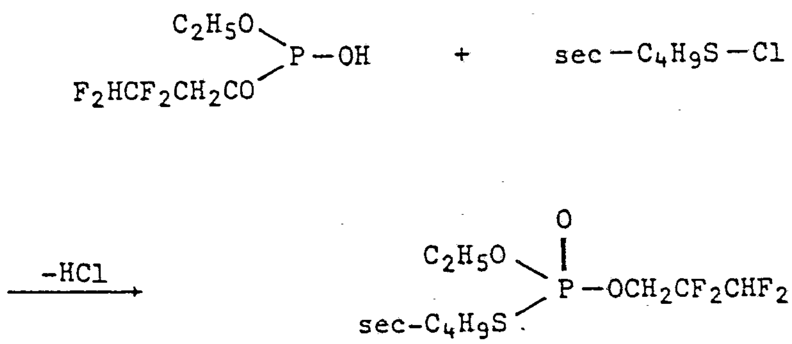


In der Verfahrensvariante c) ist das Ausgangsmaterial der Formel (VI) eine bekannte Verbindung, die in der JP-OS 9010/1980 offenbart ist.

Die Verbindung der Formel (VII) wird in einfacher Weise durch Umsetzung der entsprechenden Disulfid-Verbindung mit Chlor, Brom, Sulfurylchlorid oder Sulfurylbromid erhalten.

Die Verfahrensvariante a) wird vorzugsweise in Gegenwart eines geeigneten Lösungsmittels oder Verdünnungsmittels durchgeführt. Praktisch alle inerten Lösungsmittel können zu diesem Zweck verwendet werden.

Beispiele für solche Lösungsmittel sind aliphatische, cycloaliphatische und aromatische, gegebenenfalls chlorierte, Kohlenwasserstoffe, z.B. Hexan, Cyclohexan, Petrolether, Ligroin, Benzol, Toluol, Xylol, Methylenchlorid, Chloroform, Kohlenstofftetrachlorid, Ethylenchlorid, Trichloroethylen und Chlorbenzol; Ether, z.B. Diethylether, Methylethylether, Diisopropylether, Di-

butylether, Propylenoxid, Dioxan und Tetrahydrofuran; Ketone, z.B. Aceton, Methylethylketon, Methylisopropylketon und Methylisobutylketon; Nitrile, z.B. Acetonitril, Propionitril und Acrylnitril; Alkohole, z.B. Ethanol; Ester, z.B. Ethylacetat und Amylacetat; Säureamide, z.B. Dimethylformamid und Dimethylacetamid; Sulfone und Sulfoxide, z.B. Dimethylsulfoxid und Sulfolan; Basen, z.B. Pyridin, und dergleichen.

Die Verfahrensvariante a) kann in Gegenwart eines säurebindenden Mittels durchgeführt werden. Beispiele für gebräuchliche säurebindende Mittel sind Hydroxide, Carbonate, Hydrogencarbonate und Alkoholate von Alkalimetallen und dergleichen; und tertiäre Amine, z.B. Triethylamin, Diethylanilin, Pyridin und dergleichen.

Die Verfahrensvariante a) kann innerhalb eines breiten Temperaturbereichs durchgeführt werden, im allgemeinen von etwa -20°C bis 150°C, vorzugsweise von etwa -10°C bis 100°C. Die Reaktion wird vorzugsweise unter normalem Druck durchgeführt, obwohl es auch möglich ist, die Reaktion unter höherem oder niedrigerem Druck durchzuführen.

Zur Durchführung der Verfahrensvarianten b) und c) werden vorzugsweise die gleichen inerten Lösungsmittel verwendet, wie sie oben aufgeführt sind, so daß das angestrebte Produkt mit hoher Reinheit und in hoher Ausbeute erhalten werden kann.

Die Verfahrensvarianten b) und c) können innerhalb eines breiten Temperaturbereichs durchgeführt werden, im allgemeinen von etwa -20°C bis zum Siedepunkt der Reaktionsmischung, vorzugsweise von etwa 0°C bis 100°C. Die Reaktion wird vorzugsweise unter normalem Druck

durchgeführt, obwohl es auch möglich ist, die Reaktion unter höherem oder niedrigerem Druck durchzuführen.

Die Verbindung der Formel (I) gemäß der vorliegenden Erfindung zeigt eine potente pestizide Wirkung, insbesondere insektizide Wirkung gegen Boden-Insekten und nematizide Wirkung. Aus diesem Grunde kann sie als Wirkstoff für Pestizide, insbesondere für Boden-Insektizide und Nematizide, eingesetzt werden.

Die erfindungsgemäße aktive Verbindung der Formel (I) zeigt eine potente pestizide Aktivität, ohne daß sie eine nennenswerte Phytotoxizität gegenüber Kulturpflanzen entfaltet. Somit kann die Verbindung der vorliegenden Erfindung zur Bekämpfung einer Vielfalt von Schädlingen eingesetzt werden, darunter saugende Insekten, beißende Insekten, parasitische Schädlinge auf Pflanzen und anderen Schädlinge, wie sie in der Landwirtschaft, in der Forstwirtschaft, beim Schutz von Vorratsprodukten und -materialien und auf dem Gebiet der Hygiene auftreten.

Zu den oben bezeichneten Schädlingen zählen:

<u>aus der Ordnung Coleoptera</u> z.B.
- Callosobruchus chinensis,
- Sitophilus zeamais,
- Tribolium castaneum,
- Epilachna vigintioctomaculata,
- Agriotes fuscicollis,
- Anomala rufocuprea,
- Leptinotarsa decemlineata,
- Diabrotica spp.,
- Monochamus alternatus,

Lissorhoptus oryzophilus,
Lyctus brunneus;

aus der Ordnung Lepidoptera z.B.
Lymantria dispar,
Malacosoma neustria,
Pieris rapae,
Spodoptera litura,
Mamestra brassicae,
Chilo suppressalis,
Pyrausta nubilalis,
Ephestia cautella,
Adoxophyes orana,
Carpocapsa pomonella,
Agrotis fucosa,
Galleria mellonella,
Plutella maculipennis,
Heliothis virescens,
Phyllocnistis citrella;

aus der Ordnung Hemiptera z.B.
Nephotettix cincticeps,
Nilaparvata lugens,
Pseudococcus comstocki,
Unaspis yanonensis,
Myzus persicae,
Aphis pomi,
Aphis gossypii,
Rhopalosiphum pseudobrassicae,
Stephanitis nashi,
Nezara spp.,
Cimex lectularius,
Trialeurodes vaporariorum,
Psylla spp.;

aus der Ordnung Orthoptera z.B.
Blatella germanica,
Periplaneta americana,
Gryllotalpa africana,
Locusta migratoria migratoriodes;

aus der Ordnung Isoptera z.B.
Deucotermes speratus,
Coptotermes formosanus;

aus der Ordnung Diptera z.B.
Musca domestica,
Aedes aegypti,
Hylemia platura
Culex pipiens,
Anopheles sinensis,
Culex tritaeniorhynchus.

aus der Ordnung Acarina z.B.
Tetranychus telarius,
Tetranychus urticae,
Panonychus citri,
Aculus pelekassi,
Torronomus spp.
und dergleichen.

und aus der Ordnung der Nematoden z.B.
Meloidogyne incognita,
Bursaphelenchus lignicolus Mamiya et Kiyohara,
Aphelenchoides besseyi,
Heterodera glycines,
Pratylenchus spp.
und dergleichen.

Weiterhin kann auf dem Gebiet der Tierhaltung und Tierzucht die neue Verbindung gemäß der vorliegenden Erfindung wirksam zur Bekämpfung einer Vielfalt schädlicher Tierparasiten (innerer und äußerer parasitischer Schädlinge) eingesetzt werden z.B. parasitischer Insekten, Milben und Nematoden.

Zu solchen tierparasitischen Schädlingen zählen:

<u>aus der Klasse der Insekten</u> z.B.

Gastrophilus spp.,
Stomoxys spp.,
Trichodectes spp.,
Rhodnius spp.,
Ctenocephalides canis
und dergleichen.

<u>aus der Ordnung Acarina</u> z.B.

Ornithodoros spp.,
Ixodes spp.,
Boophilus spp.
und dergleichen.

Der Begriff "Pestizid", wie er hierin verwendet wird, bezeichnet eine Substanz, die eine Bekämpfungswirkung gegen Schädlinge, einschließlich der oben aufgeführten, zeigt.

Die aktive Verbindung gemäß der Erfindung kann in gebräuchliche Formulierungen überführt werden, etwa Lösungen, Emulsionen, Suspensionen, Pulver, Stäubemittel, Schäume, Pasten, Granulat, Aerosol, mit der aktiven Verbindung imprägnierte natürliche oder synthetische Stoffe, Mikro-Kapseln, Überzugsmassen zur Verwendung auf Saatgut (Beizmittel) sowie Formulierungen

für den Einsatz mit Verbrennungseinrichtungen wie Räucherpatronen, Räucherdosen und Räucherschlangen sowie für die kalte Vernebelung und die warme Vernebelung nach dem Ultra-Low-Volume-Verfahren.

Diese Formulierungen können in bekannter Weise hergestellt werden, beispielsweise durch Vermischen der aktiven Verbindungen mit Streckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmittel können organische Lösungsmittel beispielsweise als Hilfslösungsmittel verwendet werden.

Als flüssige Lösungsmittel, Verdünnungsmittel oder Träger, insbesondere als Lösungsmittel, hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Chloroethylene oder Methylenchlorid, aliphatische oder alicyclische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaler Temperatur und normalem Druck gasförmig wären, beispielsweise Aerosol-Treibmittel wie halogenierte

Kohlenwasserstoffe sowie Butan, Propan, Stickstoff und Kohlenstoffdioxid.

Als feste Träger verwendbar sind gemahlene natürliche Minerale wie Kaoline, Tone, Talkum, Kreide, Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischen und organischen Mehlen und Granulat aus organischem Material wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, farbgebende Mittel, etwa anorganische Pigmente wie beispielsweise Eisenoxid, Titanoxid und Preußisch Blau und organische Farbstoffe wie Alizarin-Farbstoffe, Azo-Farbstoffe oder Metallphthalocyanin-

Farbstoffe, sowie Spuren-Nährstoffe wie Salze von Eisen, Mangan, Bor, Kupfer, Cobalt, Molybdän und Zink zu verwenden.

Die Formulierungen enthalten im allgemeinen 0,1 bis 95 Gew.-%, vorzugsweise 0,5 bis 90 Gew.-% der aktiven Verbindung.

Die aktive Verbindung der Formel (I) kann als solche, in ihren handelsüblichen Formulierungen oder den aus diesen Formulierungen hergestellten Anwendungsformen, gegebenenfalls zusammen mit anderen Insektiziden, giftigen Ködern, Bakteriziden, Akariziden, Nematiziden, Fungiziden, Wachstumsregulatoren oder Herbiziden, verwendet werden. Beispiele für andere Pestizide umfassen Mittel, die sich z.B. von organischen Phosphaten, Carbamaten, Carboxylaten, chlorierten Kohlenwasserstoffen ableiten, und antibiotische Produkte.

Weiterhin kann die aktive Verbindung der Formel (I) gemäß der vorliegenden Erfindung in ihren handelsüblichen Formulierungen oder technischen Anwendungsformen im Gemisch mit einem synergistischen Mittel vorliegen. "Synergistisches Mittel" ist eine Verbindung, die selbst nicht aktiv ist, die jedoch die Wirkung einer aktiven Verbindung fördert.

Der Gehalt der aktiven Verbindung in den aus den im Handel erhältlichen Formulierungen hergestellten Anwendungsformen kann innerhalb weiter Grenzen variieren. Die Konzentration der aktiven Verbindung in den Anwendungsformen kann 0,0000001 bis 100 Gew.-% betragen und liegt vorzugsweise zwischen 0,00001 und 1 Gew.-%.

Die Verbindung der Formel (I) kann in üblicher Weise in einer der jeweiligen Anwendungsform angemessenen Weise zur Anwendung gebracht werden.

Bei der Verwendung gegen Hygiene-Schädlinge und Schädlinge in Produkt-Vorräten zeichnet sich die aktive Verbindung durch eine hervorragende Rückstandswirkung auf Holz und Erde sowie eine gute Beständigkeit gegen Alkali auf gekalkten Unterlagen aus.

Die Erfindung wird durch Beispiele näher erläutert. Es ist jedoch darauf hinzuweisen, daß der Umfang der Erfindung nicht auf diese Beispiele beschränkt ist.

<u>Herstellungsbeispiel</u>:

<u>Beispiel 1</u>

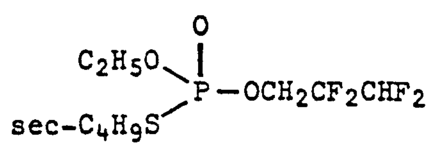

(Verbindung der vorliegenden Erfindung)

O-Ethyl-S-sec-butylphosphochloridothioat (6,5 g), 2,2,3,3-Tetrafluoro-1-propanol (4 g) und Toluol (80 ml) wurden miteinander vermischt, und Triethylamin (3,1 g) wurde tropfenweise unter Rühren bei einer Temperatur von 0 °C bis 5 °C hinzugegeben. Die erhaltene Mischung wurde allmählich auf 60 °C erhitzt und 2 h bei dieser Temperatur gerührt. Dann wurde die Reaktionsmischung abkühlen gelassen. Die Mischung wurde mit 1-proz. Salzsäure, mit einer 2-proz. wäßrigen Kaliumhydroxid-Lösung

und mit Wasser, in dieser Reihenfolge, gewaschen und dann über wasserfreiem Natriumsulfat getrocknet. Das Toluol wurde daraus abdestilliert, und der Rückstand wurde einer Vakuum-Destillation unterworfen, wonach das angestrebte O-Ethyl-S-sec-butyl-O-2,2,3,3-tetrafluoro-1-propylphosphorothiolat (7,0 g) erhalten wurde; Sdp. 105-109 °C/1,87 mbar (1,4 mmHg); $n_D^{20}$ = 1,4095.

Biotest-Beispiele:

Aktive Vergleichsverbindung A-1

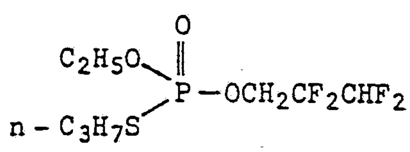

(bekannt aus der JP-OS 9010/1980)

Beispiel 2

Test gegen Sojabohnenälchen (Heterodera glycines):

Formulierung der aktiven Verbindung:
2 Teile der aktiven Verbindung und 98 Teile Talkum wurden in einer Mühle miteinander vermischt.

Test-Verfahren:
Die für den Test zu verwendende Erde wurde zunächst mit Sojabohnenälchen verseucht. Die wie oben angegeben zubereitete aktive Verbindung wurde in Mengen von 10, 5 2,5, 1,25, 0,625 oder 0,3125 ppm auf die Erde aufgebracht. Die betreffenden Test-Böden wurden dann zur Bildung einer Boden-Struktur verrührt. Die Erde wurde

dann in Töpfe mit einer Fläche von 2 $dm^2$ gefüllt. Sojabohnen-Samen (Varietät Tachisuzunari) wurde dann in die Erde eingesät, mit der Maßgabe, daß die Zahl der Samenkörner pro Topf etwa 20 betrug. Die Pflanzen wurden 4 Wochen im Gewächshaus angezogen. Danach wurden die Pflanzen vorsichtig herausgezogen, ohne dabei ihre Wurzeln zu verletzen.

In jeder Test-Gruppe wurden Proben von jeweils 10 Pflanzen untersucht, um den Grad der Schädigung durch die Schädlinge nach der folgenden Bewertungsskala aufzuzeichnen:

<u>Grad der Schädigung</u>:

0: keine Zysten (vollständiger Schutz);
1: leichte Zystenbildung;
3: intensive Zystenbildung;
4: sehr intensive Zystenbildung (kein Schutz).

Danach wurde der Zysten-Index nach der folgenden Formel berechnet:

$$\text{Zysten-Index} = \frac{\Sigma\ (D \times Yn)}{Y \times 4} \times 100$$

Hierin bedeuten

D = Grad der Schädigung
Yn = Zahl der Pflanzen mit dem betreffenden D-Wert
Y = Gesamtzahl der untersuchten Pflanzen.

Die Schutzwirkung (%) der aktiven Verbindung wurde nach der folgenden Gleichung berechnet:

$$\text{Schutzwirkung (\%)} = \left( \frac{Y - Z}{Y} \right) \times 100$$

Hierin bedeuten

Y = Zysten-Index der unbehandelten Zone (Kontrolle);
Z = Zysten-Index der behandelten Zone.

Eine Wirkung von 100 % bedeutet einen vollkommenen Schutz. Die Test-Ergebnisse sind in Tabelle 1 aufgeführt.

Tabelle 1

| Verbindung | Schutzwirkung (%) Wirkstoff-Konzentration (ppm) | | | | | |
|---|---|---|---|---|---|---|
| | 10 | 5 | 2,5 | 1,25 | 0,625 | 0,3125 |
| Aktive Verbindung der vorliegenden Erfindung | 100 | 100 | 100 | 100 | 100 | 90 |
| A-1 (Vergleichs-Verbindung) | 100 | 100 | 100 | 95 | 40 | 0 |

Beispiel 3

Test gegen Reis-Weißspitzenälchen (Aphelenchoides besseyi) (Tauchtest):

Test-Verfahren:

2 ml der Test-Verbindung in einer vorher festgelegten Konzentration wurden in ein Test-Röhrchen mit 1,5 cm Durchmesser und 5 cm Höhe eingefüllt. Ein Tropfen einer wäßrigen Suspension von Reis-Weißspitzenälchen wurde mit Hilfe einer Spritze in das Test-Röhrchen gebracht. Das Test-Röhrchen wurde mit einem Stopfen verschlossen, um ein Verdampfen der darin befindlichen Flüssigkeit zu verhindern, 24 h in einem Thermostaten bei 28 °C stehen gelassen und dann herausgenommen.

Der Inhalt des Test-Röhrchens wurde unter einem Binokular-Mikroskop untersucht, um zu bestimmen, ob die Nematoden lebten oder tot waren. Die Test-Ergebnisse sind in Tabelle 2 aufgeführt.

Tabelle 2

| Verbindung | Schutzwirkung (%) Wirkstoff-Konzentration (ppm) 100 | 50 | 25 | 10 | 5 |
|---|---|---|---|---|---|
| Aktive Verbindung der vorliegenden Erfindung | 100 | 100 | 100 | 100 | 95 |
| A-1 (Vergleichs-Verbindung) | 100 | 95 | 50 | 0 | 0 |

Beispiel 4

Test gegen Wurzelfliegen, Zwiebelfliegen (Hylemia platura):

Test-Verfahren:

Die in gleicher Weise wie in Beispiel 2 zubereitete aktive Verbindung wurde in einer Dosierung von 50, 25, 10, 5, 2,5 oder 1 ppm der Test-Erde zugesetzt. Danach wurden die Bodenproben gerührt, um sie im wesentlichen einheitlich zu machen, und dann in Töpfe mit jeweils einer Fläche von 2 $dm^2$ gefüllt. In diese wurden Samenkörner von Zwiebeln (Varietät: Hayate) eingesät, mit der Maßgabe, daß die Zahl der Samenkörner pro Topf etwa 100 betrug, und im Gewächshaus zwei Wochen wachsen

gelassen. Dann wurden (pro Topf) etwa 200 Larven der Zwiebelfliege im 1. Erscheinungsstadium in den Topf inokuliert. Zwei Wochen nach der Inokulierung wurden die Zwiebel-Pflänzchen herausgezogen und untersucht. Der Grad der Schädigung der Pflanzen wurde Topf für Topf mit Hilfe der nachstehenden Skala bestimmt:

Grad der Schädigung:
- 0: keine Schädigung;
- 1: leichte Schädigung;
- 2: mittlere Schädigung;
- 3: intensive Schädigung;
- 4: Verdorrung (Tod).

Danach wurde der Schädigungs-Index nach der folgenden Formel berechnet:

$$\text{Schädigungs-Index} = \frac{\Sigma\ (D \times Yn)}{Y \times 4} \times 100$$

Hierin bedeuten
- D = Grad der Schädigung
- Yn = Zahl der Pflanzen mit dem jeweiligen Grad (pro Topf)
- Y = Gesamtzahl der untersuchten Pflanzen (pro Topf).

Als nächstes wurde die Schutzwirkung (%) berechnet:

$$\text{Schutzwirkung (\%)} = \left( \frac{Y - Z}{Y} \right) \times 100$$

Hierin bedeuten
- Y = Schädigungs-Index in der unbehandelten Zone;
- Z = Schädigungs-Index der behandelten Zone.

Die Test-Ergebnisse sind in Tabelle 3 aufgeführt.

<u>Nit 220</u>

Tabelle 3

| Verbindung | Schutzwirkung (%) (Bekämpfungswirkung) Wirkstoff-Konzentration (ppm) | | | | | |
| --- | --- | --- | --- | --- | --- | --- |
| | 50 | 25 | 10 | 5 | 2,5 | 1 |
| Aktive Verbindung der vorliegenden Erfindung | 100 | 100 | 100 | 100 | 100 | 80 |
| A-1 (Vergleichs-Verbindung) | 100 | 100 | 100 | 100 | 20 | 0 |

Nit 220

## P a t e n t a n s p r ü c h e

1. O-Ethyl-S-sec-butyl-O-2,2,3,3-tetrafluoro-1-propylphosphorothiolat der Formel

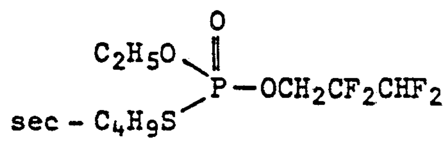

2. Verfahren zur Herstellung von O-Ethyl-S-sec-butyl-O-2,2,3,3-tetrafluoro-1-propylphosphorothiolat der Formel

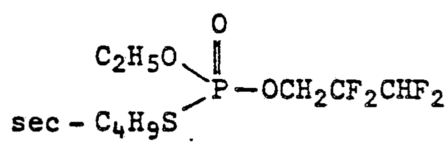

,

dadurch gekennzeichnet, daß

a) Thiophosphorylhalogenide der Formel (II)

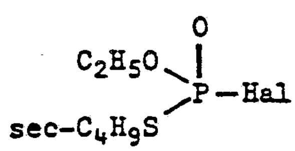

(II)

,

in der Hal Halogen bezeichnet, mit Verbindungen der Formel (III)

$$M\text{-}OCH_2CF_2CHF_2 \qquad (III),$$

in der M Wasserstoff oder ein Alkalimetall-Atom ist, in Gegenwart eines inerten Lösungsmittels und

gegebenenfalls in Gegenwart eines säurebindenden Mittels umgesetzt werden oder

b) Verbindungen der Formel (IV)

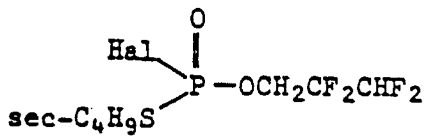

(IV)

in der Hal die oben angegebene Bedeutung hat, mit Verbindungen der Formel (V)

$$M\text{-}O\text{-}C_2H_5 \qquad (V),$$

in der M die oben angegebenen Bedeutungen hat, in Gegenwart eines inerten Lösungsmittels und gegebenenfalls in Gegenwart eines säurebindenden Mittels umgesetzt werden oder

c) O-Ethyl-O-2,2,3,3-tetrafluoro-1-propylphosphit der Formel (VI)

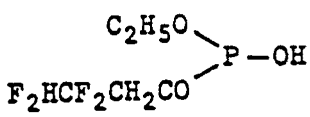

(VI)

mit Verbindungen der Formel (VII)

$$sec\text{-}C_4H_9S\text{-}Hal \qquad (VII),$$

in der Hal die oben angegebene Bedeutung hat, in Gegenwart eines inerten Lösungsmittels und gegebenenfalls in Gegenwart eines säurebindenden Mittels umgesetzt werden.

3. Insektizide und nematizide Mittel, dadurch gekennzeichnet, daß sie wenigstens das Phosphorothiolat der Formel (I) nach den Ansprüchen 1 oder 2 enthalten.

4. Verfahren zur Bekämpfung schädlicher Insekten und Nematoden dadurch gekennzeichnet, daß man das Phosphorothiolat der Formel (I) nach den Ansprüchen 1 oder 2 auf die schädlichen Insekten oder Nematoden und/oder deren Lebensraum einwirken läßt.

5. Verwendung des Phosphorothiolats der Formel (I) nach den Ansprüchen 1 oder 2 zur Bekämpfung schädlicher Insekten und Nematoden.

6. Verfahren zur Herstellung insektizider und nematizider Mittel, dadurch gekennzeichnet, daß das Phosphorothiolat der Formel (I) nach den Ansprüchen 1 oder 2 mit Streckmitteln und/oder grenzflächenaktiven Mitteln vermischt wird.

Europäisches Patentamt

# EUROPÄISCHER RECHERCHENBERICHT

Nummer der Anmeldung

EP 87 11 6145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 007 020 (NIHON TOKUSHU NOYAKU SEIZO K.K.)<br>* Seiten 29-32 *<br>----- | 1-6 | C 07 F 9/165<br>A 01 N 57/12 |
| | | | **RECHERCHIERTE SACHGEBIETE (Int. Cl.4)** |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 19-02-1988 | BESLIER L.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)